# FASCICULE DE BREVET EUROPEEN

(11) **EP 2 820 361 B1**
(45) Date de publication et mention de la délivrance du brevet: **09.11.2016**
(21) Numéro de dépôt: 13715258.3
(22) Date de dépôt: 21.02.2013
(51) Int. Cl.: F25B 21/00, H01F 7/02

(54) **GÉNÉRATEUR DE CHAMP MAGNÉTIQUE POUR APPAREIL THERMIQUE MAGNÉTOCALORIOUE**
MAGNETFELDGENERATOR FÜR EINE MAGNETOKALORISCHE THERMISCHE VORRICHTUNG
MAGNETIC FIELD GENERATOR FOR MAGNETOCALORIC THERMAL APPLIANCE

(30) Priorité: 28.02.2012 FR 1251803
(43) Date de publication de la demande: 07.01.2015
(73) Titulaire: Cooltech Applications S.A.S., 67810 Holtzheim (FR)
(72) Inventeur: MULLER, Christian, F-67000 Strasbourg (FR); CHAUSSIN, Magali, F-67117 Furdenheim (FR)
(74) Mandataire: Koelbel, Caroline
(86) Numéro de dépôt international: PCT/FR2013/000046
(87) Numéro de publication internationale: WO 2013/128085

(56) Documents cités:
- WO-A2-2005/074608
- US-A1- 2005 046 533

## Description

### Domaine technique :

La présente invention concerne un générateur de champ magnétique pour un appareil thermique magnétocalorique comportant une première et une seconde structures magnétisantes montées chacune dans une carcasse en regard l'une de l'autre, parallèlement, et agencées pour définir au moins deux entrefers diamétralement opposés, chaque structure magnétisante comportant un premier et un second assemblages magnétisants structurellement identiques, diamétralement opposés et disposés de part et d'autre d'une pièce centrale ferromagnétique, chaque premier et second assemblages magnétisants comprenant un premier, respectivement un second, aimant central polygonal uniformément aimanté comportant une face active du côté de l'entrefer et une face passive, parallèles entre elles et comportant au moins quatre côtés, le vecteur d'induction magnétique de chaque aimant central étant perpendiculaire à ses faces active et passive, lesdites autres faces, dites faces latérales de chaque aimant central étant quadrangulaires, perpendiculaires auxdites faces active et passive et en contact avec les faces, dites faces intérieures d'une ceinture magnétique uniformément aimantée entourant chaque aimant central et comportant des faces extérieures parallèles auxdites faces intérieures, les vecteurs d'induction magnétique dans chaque ceinture magnétique étant perpendiculaires à ses faces intérieures, lesdits premier et second assemblages magnétisants étant reliés à ladite pièce ferromagnétique par l'intermédiaire de chaque ceinture magnétique correspondante.

### Technique antérieure

La technologie du froid magnétique à température ambiante est connue depuis plus d'une vingtaine d'années et on connaît ses avantages en termes d'écologie et de développement durable. On connaît également ses limites quant à sa puissance calorifique utile et à son rendement thermique. Dès lors, les recherches menées dans ce domaine tendent toutes à améliorer les performances des appareils thermiques magnétocaloriques, en jouant sur les différents paramètres, tels que l'intensité du champ magnétique, les performances du matériau magnétocalorique, la surface d'échange thermique entre le fluide caloporteur et les matériaux magnétocaloriques, les performances des échangeurs de chaleur, etc.

Dans ces appareils, il est indispensable de générer un champ magnétique uniforme et intense dans au moins un entrefer dans lequel est positionné et retiré au moins un élément en matériau magnétocalorique. Plus le champ magnétique est élevé, plus l'effet magnétocalorique de l'élément en matériau magnétocalorique est important, ce qui a pour effet d'augmenter la puissance thermique et donc le rendement d'un appareil thermique magnétocalorique.

En outre, dans certains domaines, la compacité de l'appareil thermique est primordiale et incite à une configuration ou structure rotative dans laquelle le système magnétique est en déplacement relatif par rapport au(x) matériau(x) magnétocalorique(s). Une telle configuration rotative a en effet l'avantage de présenter un bon ratio de matériau magnétocalorique par volume utilisé. Etant donné que la puissance thermique de l'appareil thermique dépend notamment de la quantité de matériau magnétocalorique utilisée, une telle disposition est effectivement très avantageuse.

Les publications WO 2005/074608 A2 et US 2005/0046533 A1 proposent un générateur de champ magnétique, tel que défini dans le préambule de la revendication 1, comportant notamment deux entrefers diamétralement opposés dans lesquels circule un flux magnétique dans la même direction mais appartenant à deux boucles magnétiques distinctes, le retour des boucles magnétiques s'effectuant par l'axe central du générateur qui correspond à l'axe de rotation dudit générateur.

Or, cet axe central réalisé en une matière perméable magnétiquement doit être assez épais, et donc présenter assez de matière, pour permettre de conduire le flux d'induction magnétique des deux boucles magnétiques sans qu'il n'y ait de saturation magnétique.

A ce jour, il n'existe de ce fait pas de générateur magnétique présentant un encombrement restreint, un poids limité, un faible coût de revient, pouvant être monté dans un appareil rotatif et susceptible de générer un champ magnétique uniforme d'au moins un tesla.

### Exposé de l'invention:

La présente invention vise à répondre à ces demandes en proposant un générateur de champ magnétique destiné à être intégré dans un appareil thermique magnétocalorique. Ce générateur de champ magnétique est susceptible de créer un champ magnétique intense et uniforme dans au moins deux entrefers, chaque entrefer étant délimité par deux aimants centraux en regard l'un de l'autre. En outre le générateur de champ magnétique selon l'invention est également facile à fabriquer, présente un assemblage aisé et des composants de formes géométriques simples et donc de faible coût de revient.

Dans ce but, l'invention concerne un générateur de champ magnétique pour un appareil thermique magnétocalorique, caractérisé en ce que les première et seconde structures magnétisantes sont identiques et disposées de sorte que la face active du premier aimant central de la première structure magnétisante soit en regard de la face active du second aimant central de la seconde structure magnétisante et que la face active du second aimant central de la première structure magnétisante soit en regard de la face active du premier aimant central de la seconde structure magnétisante, en ce que le vecteur d'induction magnétique dudit premier aimant central est orienté vers sa face active et les vecteurs d'induction magnétique dans la ceinture magnétique entourant ledit premier aimant central sont dirigés vers ses faces intérieures, en ce que le vecteur d'induction magnétique dudit second aimant central est orienté vers sa face passive et les vecteurs d'induction magnétique dans la ceinture magnétique entourant ledit second aimant central sont dirigés vers ses faces extérieures, et en ce que le flux magnétique généré par ledit générateur de champ magnétique forme une boucle unique et circule, dans la première structure magnétisante, du second au premier assemblages magnétisants, dans la seconde structure magnétisante, du second au premier assemblages magnétisants et, entre les deux structures magnétisantes à travers lesdits entrefers, de la face active du premier aimant central de la première structure magnétisante à la face active du second aimant central de la seconde structure magnétisante et de la face active du premier aimant central de la seconde structure magnétisante à la face active du second aimant central de la première structure magnétisante.

Selon l'invention, une pièce de concentration magnétique réalisée en une matière ferromagnétique peut être superposée à la face active de chaque aimant central et être entourée de ladite ceinture magnétique.

En outre, chaque aimant central peut comporter une pièce de concentration magnétique réalisée en une matière ferromagnétique disposée entre deux aimants permanents, le tout étant entouré de ladite ceinture magnétique.

Les premier et second aimants centraux peuvent être constitués de plusieurs aimants permanents.

Lesdites première et seconde structures magnétisantes sont montées chacune dans une carcasse formant support et préférablement réalisée en une matière ferromagnétique.

En variante, lesdites première et seconde structures magnétisantes peuvent être montées chacune dans une carcasse formant support et réalisée en une matière amagnétique.

Le générateur selon l'invention peut également comprendre une troisième structure magnétisante comportant deux aimants centraux polygonaux uniformément aimantés disposés respectivement entre les premier et second aimants centraux desdites première et seconde structures magnétisantes, lesdits aimants centraux de ladite troisième structure magnétisante comportant une première face active et une seconde face active parallèles entre elles et aux faces actives des premiers et seconds aimants centraux, le vecteur d'induction magnétique de chacun desdits aimants centraux de ladite troisième structure magnétisante peut présenter la même orientation et la même direction que les vecteurs d'induction des premier et second aimants centraux entre lesquels ils sont disposés, et ils peuvent former quatre entrefers superposés deux à deux et diamétralement opposés deux à deux.

Selon l'invention, les ceintures magnétiques peuvent être constituées de plusieurs aimants permanents polygonaux.

Les éléments magnétocaloriques susceptibles d'être positionnés dans les entrefers du générateur de champ magnétique selon l'invention sont destinés à être en contact thermique avec un fluide caloporteur. Ce fluide caloporteur circule de leur extrémité froide vers leur extrémité chaude au cours d'une première phase du cycle magnétique qui correspond à une phase dans laquelle les matériaux ou éléments magnétocaloriques sont soumis à une augmentation de leur température (lorsqu'ils sont positionnés dans un entrefer) et de leur extrémité chaude vers leur extrémité froide au cours d'une seconde phase du cycle magnétique dans laquelle les matériaux ou éléments magnétocaloriques sont soumis à une diminution de leur température (lorsqu'ils sont positionnés hors de l'entrefer). Le contact thermique entre le fluide caloporteur et les éléments magnétocaloriques peut être réalisé par un fluide caloporteur passant le long ou à travers des matériaux magnétocaloriques. A cet effet, les éléments magnétocaloriques peuvent être constitués par un ou plusieurs matériaux magnétocaloriques et peuvent être perméables au fluide caloporteur. Ils peuvent également comprendre des passages de circulation du fluide s'étendant entre les deux extrémités des matériaux magnétocaloriques. Ces passages peuvent être réalisés par la porosité des matériaux magnétocaloriques, ou par des canaux usinés ou obtenus par un ensemble de plaques de matériau magnétocalorique.

De préférence, le fluide caloporteur est un liquide. A cet effet, il est par exemple possible d'utiliser de l'eau pure ou additionnée d'antigel, un produit glycolé ou une saumure.

### Description sommaire des dessins :

La présente invention et ses avantages apparaîtront mieux dans la description suivante de modes de réalisation donnés à titre d'exemples non limitatifs, en référence aux dessins annexés, dans lesquels:
- la figure 1 est une vue en perspective d'un générateur de champ magnétique selon l'invention,
- la figure 2 représente une structure magnétisante du générateur de champ magnétique de la figure 1 montée dans une carcasse formant support,
- la figure 3 représente une vue en coupe verticale du générateur de la figure 1 sur laquelle sont représentés les lignes de champ magnétique,
- la figure 4 est une vue en perspective d'une première variante de réalisation du générateur de champ magnétique selon l'invention,
- la figure 5 est une vue en perspective d'une seconde variante de réalisation du générateur de champ magnétique selon l'invention,
- la figure 6 est une vue en perspective d'une troisième variante de réalisation du générateur de champ magnétique selon l'invention,
- la figure 7A est une vue simplifiée en perspective d'une structure magnétisante du générateur de champ magnétique de la figure 6 montée dans une carcasse formant support,
- la figure 7B est une vue en coupe selon le plan A-A de la figure 7A, et
- la figure 8 est une vue en perspective d'une quatrième variante de réalisation du générateur de champ magnétique selon l'invention,
- la figure 9 représente une autre variante de réalisation selon une vue similaire à celle de la figure 7B.

### Illustrations de l'invention et différentes manières de la réaliser :

Dans les exemples de réalisation illustrés, les pièces ou parties identiques portent les mêmes références numériques.

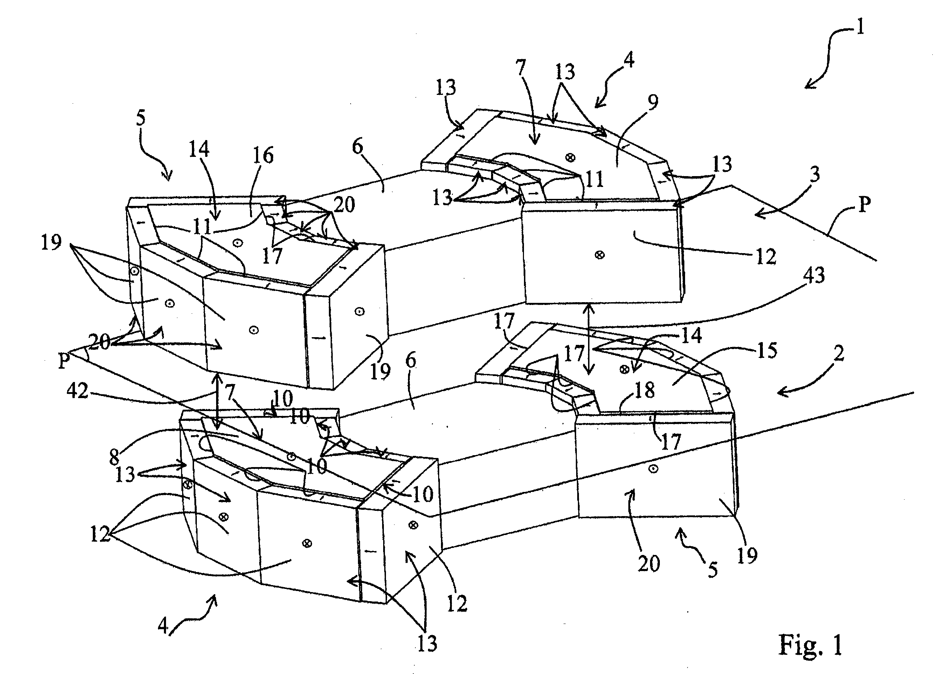

La figure 1 représente une première forme de réalisation d'un générateur 1 de champ magnétique selon l'invention. Ce générateur de champ magnétique 1 comporte une première structure magnétisante 2 et une seconde structure magnétisante 3 identiques, parallèles, montées tête-bêche et disposées en regard l'une de l'autre pour délimiter entre elles deux entrefers 42, 43 diamétralement opposés. Chaque structure magnétisante 2, 3 comporte un premier assemblage magnétisant 4 et un second assemblage magnétisant 5. Les deux structures magnétisantes 2 et 3 sont disposées parallèlement l'une part rapport à l'autre, de part et d'autre d'un plan P et de telle sorte que le premier assemblage magnétisant 4 de la première structure magnétisante 2 soit en regard du second assemblage magnétisant 5 de la seconde structure magnétisante 3 et que le second assemblage magnétisant 5 de la première structure magnétisante 2 soit en regard du premier assemblage magnétisant 4 de la seconde structure magnétisante 3. Les assemblages magnétisants 4, 5 de chaque structure magnétisante 2, 3 sont reliés entre eux par une pièce ou un élément ferromagnétique 6.

Le fait que les deux structures magnétisantes 2, 3 formant le générateur de champ magnétique 1 soient identiques répond à une contrainte d'optimisation des coûts de revient pour la fabrication dudit générateur selon l'invention. En effet, cela permet de réduire le nombre de pièces nécessaires à sa fabrication, donc de faciliter son montage, le référencement des pièces et la gestion du stock.

Dans l'exemple illustré à la figure 1, chaque assemblage magnétisant 4, 5 est uniformément magnétisé et comporte un aimant central 7, respectivement 14, dont le vecteur d'induction est perpendiculaire au plan P. Dans une structure magnétisante 2, 3, le sens du vecteur d'induction du premier aimant central 7 du premier assemblage magnétisant 4 est inversé par rapport au sens du vecteur d'induction magnétique du second aimant central 14 du second assemblage magnétisant 5. La forme de l'aimant central 7, 14 peut être différente de celle représentée, est adaptée à la forme ou au volume des matériaux magnétocaloriques devant être soumis au champ magnétique des aimants centraux 7, 14.

A cet effet, en considérant la première structure magnétisante 2 du générateur de la figure 1, représentée sur la partie inférieure du dessin, le premier aimant central 7 du premier assemblage magnétisant 4 présente une face active 8, du côté de l'entrefer 42, 43, située en regard du plan P et de laquelle sort le flux d'induction magnétique. De la même manière, le second aimant central 14 du second assemblage magnétisant 5 de cette première structure magnétisante 2 présente une face active 15, du côté de l'entrefer 42, 43, située en regard du plan P et dans laquelle rentre le flux d'induction magnétique. Les faces actives 8 et 15 sont, en outre, situées dans un même plan. Le vecteur d'induction magnétique présent dans le premier aimant central 7 est dirigé vers le plan P tandis que la direction du vecteur d'induction présent dans le second aimant central 14 est opposée au plan P, ces deux vecteurs étant perpendiculaires au plan P. Le premier aimant central 7, ainsi que le second aimant central 14 sont constitués par un aimant permanent décagonal dont la face active 8, 15 et la face passive 9, 16 sont parallèles entre elles. Les autres faces, dénommées faces latérales 10, 17 sont toutes rectangulaires et perpendiculaires aux faces active 8, 15 et passive 9, 16 respectives. Bien entendu, les premier et second aimants centraux 7, 14 peuvent présenter une autre forme telle qu'un prisme ou un parallélogramme, par exemple.

Les aimants centraux 7, 14 sont entourés latéralement d'une ceinture magnétique 13, 20 formée de plusieurs aimants permanents ou plaques d'aimants permanents. Ainsi, chaque face latérale 10, 17 d'un aimant central 7, 14 est en contact avec une face dite face intérieure 11, 18 de la ceinture magnétique 13, 20. Cette face intérieure 11, 18 correspond à celle des aimants permanents constituant ladite ceinture magnétique 13, 20. Les aimants permanents formant chaque ceinture magnétique 13, 20 sont des hexaèdres dont la face intérieure 11, 18 est parallèle à leur face extérieure 12, 19 formant la face extérieure de ladite ceinture magnétique 13, 20. Toute autre forme pour les aimants permanents constituant la ceinture magnétique 13, 20 peut, bien entendu, être envisagée. Le vecteur d'induction magnétique dans la ceinture magnétique 13, 20 est perpendiculaire en tout point aux faces latérales des aimants centraux 7, 14. Dans le premier assemblage magnétisant 4, le vecteur d'induction magnétique de la ceinture magnétique 13 est orienté vers le premier aimant central 7, tandis que dans le second assemblage magnétisant 5, le vecteur d'induction magnétique de la ceinture magnétique 20 est orienté dans le sens opposé, c'est-à-dire qu'il s'éloigne ou est opposé au second aimant central 14. Grâce aux ceintures magnétiques 13, 20, et notamment grâce à l'orientation des vecteurs d'induction de ces dernières, le champ magnétique des aimants centraux 7, 14 est intensifié et la circulation des lignes de flux à travers la pièce ferromagnétique 6 est facilitée.

Le premier et le second assemblages magnétisants 4, 5 sont reliés par l'intermédiaire d'une pièce 6 réalisée en une matière ferromagnétique telle que du fer. Dans une structure magnétisante 2, cette pièce est apte à conduire les lignes de flux magnétique sortant du second assemblage magnétisant 5 vers le premier assemblage magnétisant 4. A cet effet, les aimants permanents formant les ceintures magnétiques 13, 20 sont montés respectivement entre le premier aimant central 7 et la pièce ferromagnétique 6 et entre le second aimant central 14 et la pièce ferromagnétique 6.

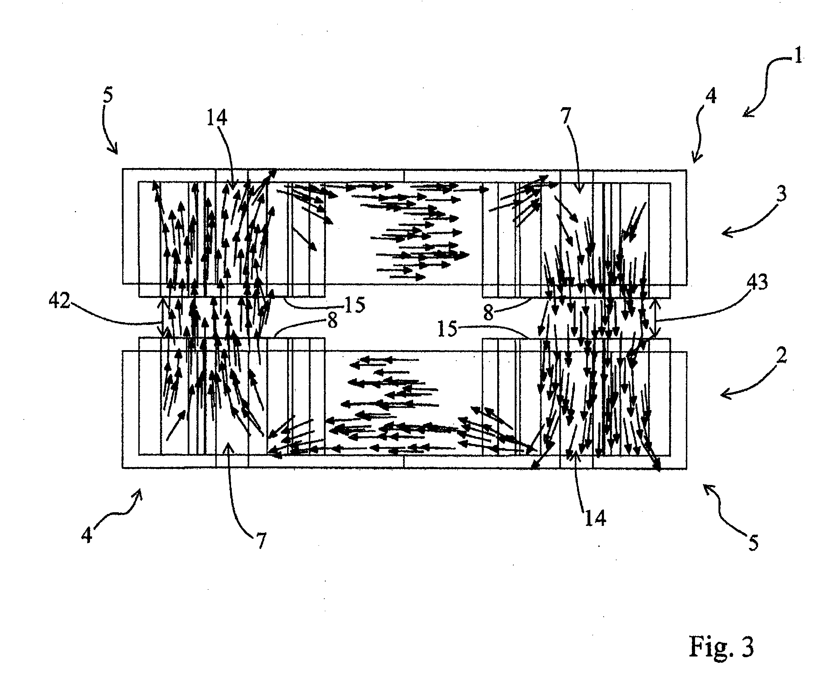

La seconde structure magnétisante 3 (illustrée dans la partie supérieure de la figure 1) est identique à la première structure magnétisante 2. Elle est disposée par rapport au plan P de telle sorte que les faces actives 8 et 15 des premier et second aimants centraux 7, 14 soient en regard et parallèles au plan P et que le premier assemblage magnétisant 4 de la première structure magnétisante 2 soit en regard du second assemblage magnétisant 5 de la seconde structure magnétisante 3 tandis que le second assemblage magnétisant 5 de la première structure magnétisante 2 soit en regard du premier assemblage magnétisant 4 de la seconde structure magnétisante 3. De cette manière, deux aimants centraux 7, 14 se faisant face et disposés de part et d'autre du plan P présentent des vecteurs d'induction de même direction et de même sens et délimitent un entrefer 42, 43 respectivement. Ainsi, le générateur de champ magnétique 1 selon l'invention présente deux entrefers 42, 43. Le premier entrefer 42 est situé à gauche sur la figure 1 et est matérialisé par le volume libre entre le premier assemblage magnétisant 4 de la première structure magnétisante 2 et le second assemblage magnétisant 5 de la seconde structure magnétisante 3 et les lignes de flux magnétiques sont orientées vers la partie supérieure de la figure 1 (vers le haut). Le second entrefer 43 est situé à droite sur la figure 1 et matérialisé par le volume libre entre le second assemblage magnétisant 5 de la première structure magnétisante 2 et le premier assemblage magnétisant 4 de la seconde structure magnétisante 3 et les lignes de flux magnétiques sont orientées vers la partie inférieure de la figure 1 (vers le bas). Le générateur de champ magnétique 1 fournit une seule et unique boucle magnétique qui circule, entre les première et seconde structures magnétisantes 2 et 3, à travers les entrefers 42, 43 dans lesquels il est concentré. Pour faciliter la compréhension, la figure 3 illustre à cet effet sous la forme de flèche les lignes de champ magnétique circulant dans le générateur de champ magnétique 1.

Le générateur de champ magnétique 1 représenté dans la figure 1 peut être monté ou supporté par un carter ou un support réalisé en une matière amagnétique et/ou ferromagnétique.

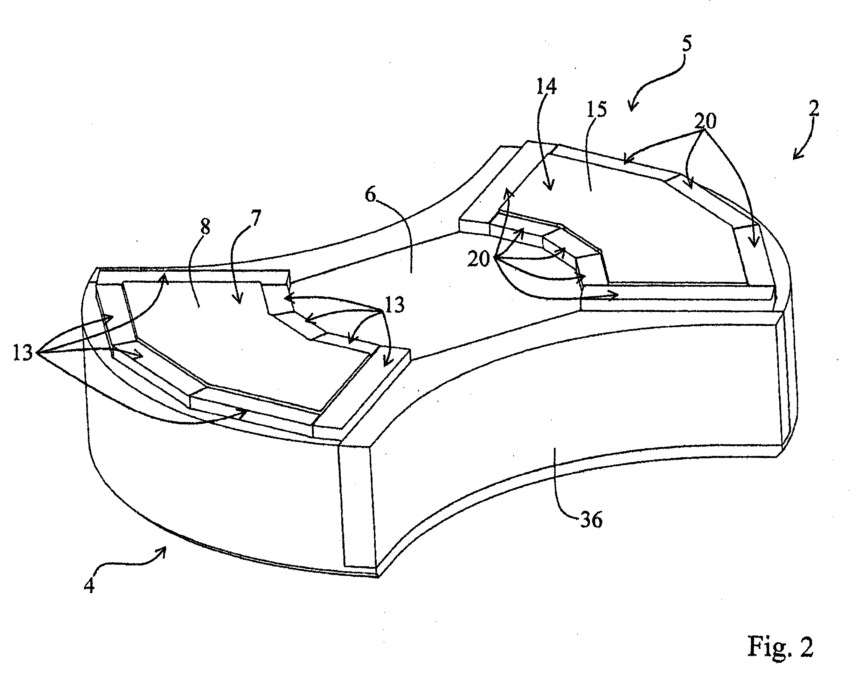

A cet effet, la figure 2 représente la première structure magnétisante 2 du générateur de champ magnétique 1 de la figure 1 et est montée dans une carcasse 36 en une matière amagnétique. Cette carcasse permet de maintenir en position les différentes pièces entre elles, sans interférer sur le flux magnétique grâce à l'utilisation d'une matière amagnétique telle que de l'aluminium, une matière plastique ou tout autre matériau équivalent.

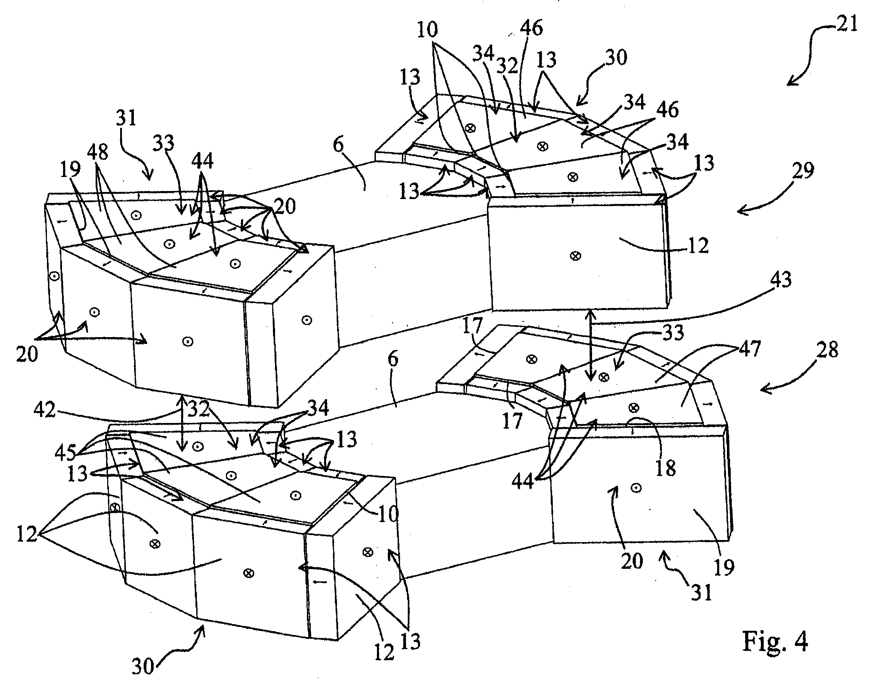

La figure 4 représente une première variante du générateur de champ magnétique de la figure 1 qui diffère par la structure des premier 32 et second 33 aimants centraux. Ce générateur de champ magnétique 21 comprend également une première 28 et une seconde 29 structures magnétisantes identiques et disposées en regard l'une de l'autre par rapport à un plan P. Le premier aimant central 32 comporte trois aimants permanents 34 identiques en forme de polyèdres à quatre faces, assemblés entre eux et dont le vecteur d'induction est le même que celui du premier aimant central 7 représenté dans le générateur de champ magnétique 1 de la figure 1. De la même manière, le second aimant central 33 comprend également trois aimants permanents 44 identiques, en forme de polyèdres à quatre faces, assemblés entre eux et dont le vecteur d'induction est le même que celui du second aimant central 14 représenté dans le générateur de champ magnétique 1 de la figure 1. La fabrication de plusieurs aimants permanents 34, 44 au lieu d'un seul 7, 14 de taille plus importante est plus économique. En effet, il est plus simple de magnétiser des petites pièces et le champ magnétique obtenu dans ces dernières est plus homogène, ce qui permet d'une part, de réduire les coûts de fabrication des aimants centraux 32, 33 et, d'autre part, d'améliorer l'homogénéité du champ magnétique dans les entrefers 42, 43 correspondants. Dans cette configuration également, la face active 45, 47 des aimants permanents 34, 44 formant les aimants centraux 32, 33 est parallèle à leur face passive 46, 48). Les entrefers 42 et 43 de ce générateur de champ magnétique 21 sont délimités d'une part, par la face active 45 des aimants permanents 34 du premier aimant central 32 de la première structure magnétisante 28 et la face active 47 des aimants permanents 44 du second aimant central 33 de la seconde structure magnétisante 29 et, d'autre part, par la face active 47 des aimants permanents 44 du second aimant central 33 de la première structure magnétisante 28 et la face active 45 des aimants permanents 34 du premier aimant central 32 de la seconde structure magnétisante 29.

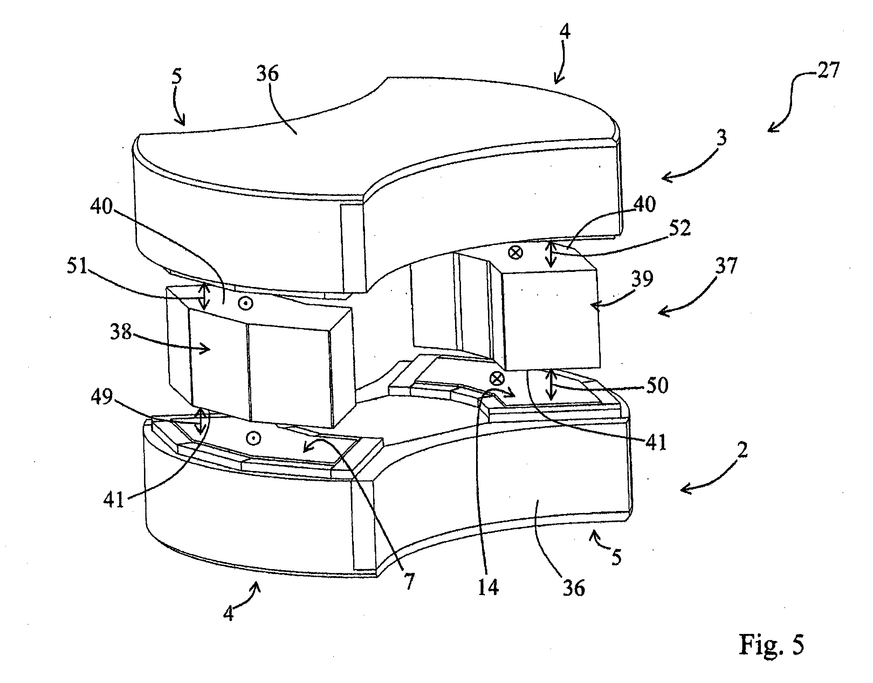

La figure 5 représente une seconde variante de réalisation du générateur de champ magnétique 27. Ce générateur de champ magnétique 27 correspond à celui de la figure 1 monté dans une carcasse 36 telle que représentée à la figure 2, et dans lequel une troisième structure magnétisante 37 a été montée. Cette troisième structure magnétisante 37 comporte deux aimants centraux 38 et 39 polygonaux et uniformément aimantés. Un premier aimant central 38 est monté entre le premier assemblage magnétisant 4 de la première structure magnétisante 2 et le second assemblage magnétisant 5 de la seconde structure magnétisante 3, tandis que l'autre aimant central 39 est monté entre le second assemblage magnétisant 5 de la première structure magnétisante 2 et le premier assemblage magnétisant 4 de la seconde structure magnétisante 3. Les aimants centraux 38, 39 comportent deux faces actives 40 et 41 parallèles entre elles et aux faces actives 8, 15 des aimants centraux 7, 14 des première et seconde structures magnétisantes 2, 3. A titre d'exemple, les aimants centraux 38, 39 peuvent être constitués par un seul aimant permanent, par plusieurs aimants permanents ou encore comprendre une structure dite en sandwich comprenant des aimants permanents interposés de part et d'autre d'une pièce en une matière ferromagnétique. En outre, pour permettre de réaliser une boucle magnétique continue avec un champ magnétique intense, le vecteur d'induction magnétique de chacun des aimants centraux 38, 39 présente la même orientation et la même direction que les vecteurs d'induction des premier et second aimants centraux 7, 14 entre lesquels ils sont disposés.

Bien entendu, et bien que cela ne soit pas représenté, cette troisième structure magnétisante 37 peut également être montée dans une carcasse ou un carter amagnétique. Elle présente l'avantage de fournir quatre entrefers 49, 50, 51, 52 dans un encombrement restreint et avec un poids réduit. Dans cette réalisation également, le flux de champ magnétique circule dans une unique boucle magnétique et, entre les différentes structures magnétisantes 2, 3 et 37, uniquement à travers les entrefers 49, 50,51,52.

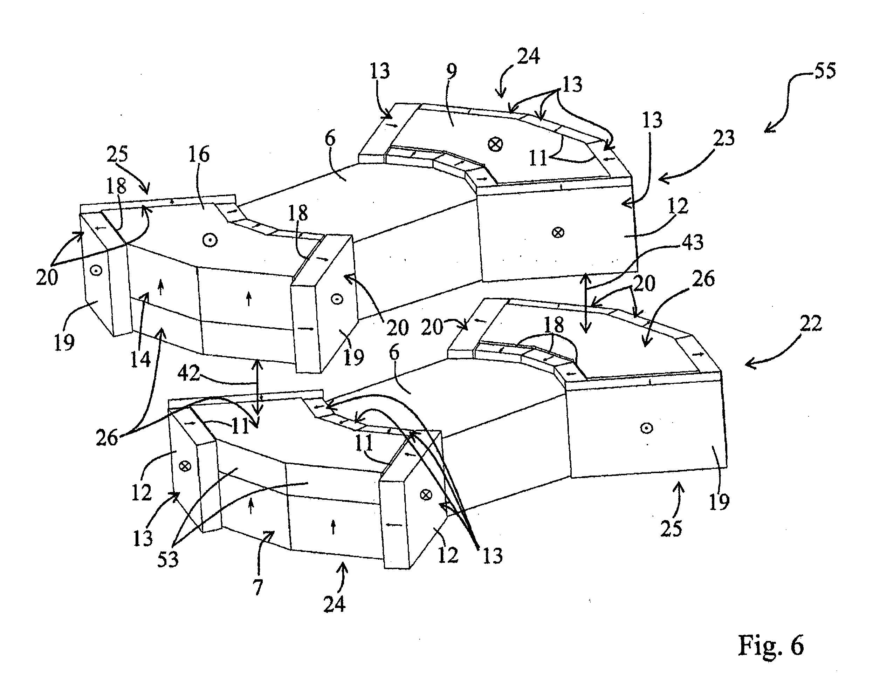

La figure 6 représente une troisième variante de réalisation d'un générateur de champ magnétique 55 qui se distingue du générateur de champ magnétique 1 de la figure 1 par la configuration des premier 24 et second 25 assemblages magnétisants. En effet, chaque aimant central 7, 14 est surmonté, au niveau de sa face active 8, 15, d'une pièce polaire ou pièce de concentration magnétique 26 réalisée en une matière ferromagnétique. Une telle pièce polaire 26 permet de concentrer dans les entrefers 42, 43 le flux magnétique provenant de la ceinture magnétique 13, 20 et de l'aimant central 7, 14. Comme pour l'aimant central 7, 14, les faces latérales 53 de la pièce polaire 26 sont en contact avec les faces intérieures 11, 18 de la ceinture magnétique 13, 20. Pour faciliter la compréhension, deux aimants permanents des ceintures magnétiques 13, 20 ont été retirés dans le premier ensemble magnétisant 24 de la première structure magnétisante 22 et dans le second ensemble magnétisant 25 de la seconde structure magnétisante 23.

Dans le générateur de champ magnétique 55 représenté à la figure 6, les aimants centraux 7, 14 sont réalisés d'un seul tenant par un unique aimant permanent. Il peut toutefois également être prévu de réaliser ces aimants centraux 7, 14 en juxtaposant plusieurs aimants permanents, comme cela est illustré par exemple dans le générateur de champ magnétique 21 de la figure 4.

Le générateur de champ magnétique 55 représenté dans la figure 6 peut être monté ou supporté par un carter ou un support réalisé en une matière amagnétique ou ferromagnétique pour maintenir en position les différentes pièces entre elles.

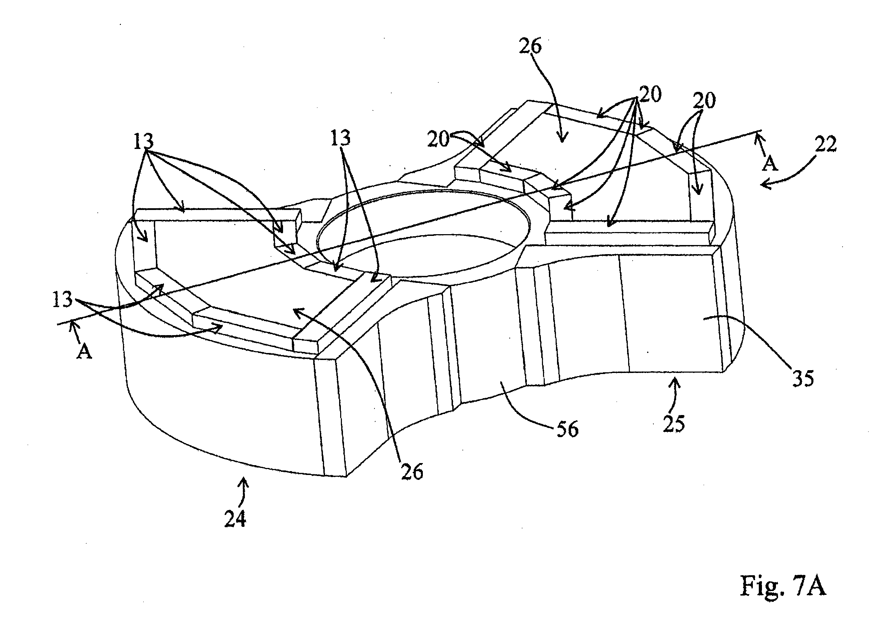

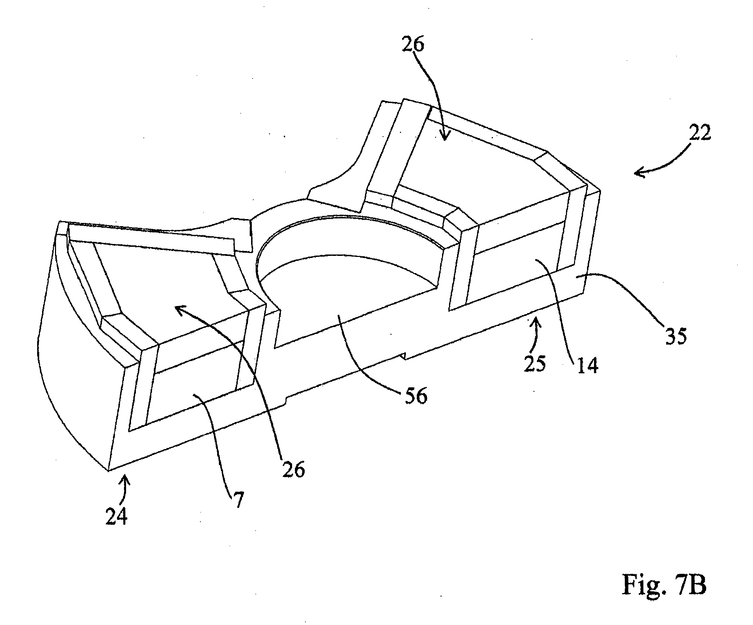

A cet effet, les figures 7A et 7B représentent les assemblages magnétisant 24 et 25 du générateur de champ magnétique 55 de la figure 6 montés chacun dans une carcasse 35 réalisée en une matière ferromagnétique, et dans laquelle la pièce ferromagnétique 56 fait partie intégrante de ladite carcasse 35. Une telle configuration est également possible avec les assemblages magnétisants 4, 5, 30, 31 des autres variantes de réalisation. Elle permet d'optimiser l'exploitation du flux magnétique généré par les ceintures magnétiques 13, 20 et d'empêcher une éventuelle saturation magnétique.

Le matériau de la carcasse 35 peut être du fer, par exemple, ou toute autre matériau équivalent perméable au flux magnétique.

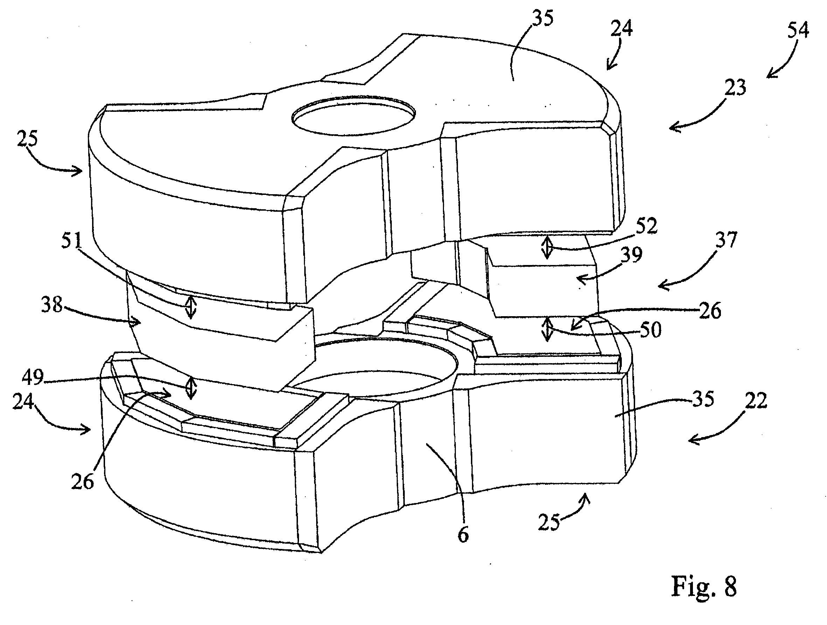

La figure 8 représente une autre variante de réalisation du générateur de champ magnétique 54. Le générateur de champ magnétique 54 reprend les structures magnétisantes 22, 23 des figures 7A et 7B et intègre en outre une troisième structure magnétisante 37, de la même manière que dans le générateur de champ magnétique 27 représenté à la figure 5. Cette troisième structure magnétisante 37 comporte deux aimants centraux 38 et 39 polygonaux et uniformément aimantés. Dans cet exemple également, le vecteur d'induction magnétique de chacun des aimants centraux 38, 39 présente la même orientation et la même direction que les vecteurs d'induction des premier et second aimants centraux 7, 14 surmontés par une pièce polaire 26 entre lesquels ils sont disposés.

Les mêmes avantages et remarques que ceux décrits en relation avec l'intégration de la troisième structure magnétisante 37 en regard du générateur de champ magnétique 27 de la figure 5 s'appliquent dans le générateur de champ magnétique 54 de la figure 8. En outre, l'aimant constituant la troisième structure magnétisante 37 peut être d'un seul tenant ou être réalisé à partir d'un assemblage de plusieurs aimants permanents, à l'image des aimants centraux 32, 33 de la figure 4.

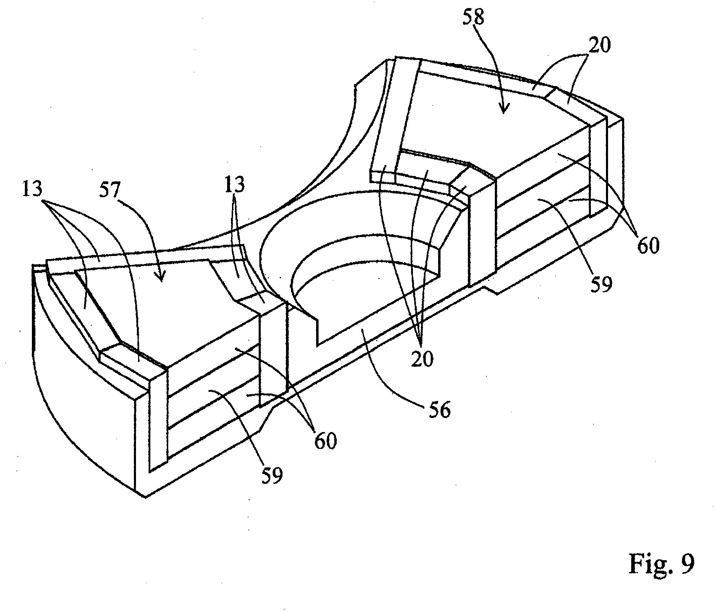

La figure 9 représente une autre variante de réalisation des premier et second assemblages magnétisants dans lesquels les premier 57 et second 58 aimants centraux sont réalisés selon une structure dite en sandwich comportant trois couches parallèles. Ces couches comportent une couche centrale constituée par une pièce polaire 59 réalisée en un matériau ferromagnétique disposée entre deux couches d'aimants permanents 60. Chaque aimant permanent 60 peut être constitué d'un seul aimant permanent ou de plusieurs aimants permanents. Par rapport aux autres variantes, une telle configuration permet de réduire la quantité d'aimants permanents nécessaire dans un aimant central 57, 58 et donc de réduire le coût lié à la matière ce, sans réduire le champ magnétique présent dans les entrefers.

Les générateurs de champ magnétique 1, 21, 27, 55 et 54 illustrés par l'ensemble des figures sont destinés à être intégrés dans un appareil thermique comportant au moins un élément magnétocalorique. Cet élément magnétocalorique peut être constitué par un ou plusieurs matériaux magnétocaloriques et est traversé ou en contact thermique par un fluide caloporteur circulant de manière alternée dans deux directions opposées selon la position dudit élément magnétocalorique dans et hors d'un entrefer 42, 43, 49, 50, 51, 52.

Les générateurs de champ magnétique 1, 21, 27, 55, 54 représentés comportent au moins deux entrefers 42, 43, 49, 50, 51, 52, diamétralement opposés, ce qui permet également de solliciter magnétiquement au moins deux éléments magnétocaloriques simultanément par rapport à des générateurs de champ magnétique connus, et donc d'accroître le rendement d'un appareil thermique comprenant ledit générateur de champ magnétique 1, 21, 27, 55, 54, ceci, tout en conservant un encombrement restreint.

De préférence, l'élément magnétocalorique et le générateur de champ magnétique 1, 21, 27, 55, 54 sont montés avec possibilité de mouvement relatif de l'un par rapport à l'autre de sorte que ledit élément magnétocalorique puisse être disposé alternativement dans et hors d'un entrefer 42, 43, 49, 50, 51, 52. Ce changement de position peut être obtenu par une rotation continue du générateur de champ magnétique 1, 21, 27, 55, 54 par rapport audit élément magnétocalorique ou par un mouvement de va-et-vient, par exemple.

Avantageusement, l'invention permet d'obtenir un champ magnétique supérieur à 1,1 teslas dans chaque entrefer 42, 43, 49, 50, 51, 52 grâce à l'emploi d'aimants permanents dont la rémanence magnétique est comprise entre 1,37 et 1,43 teslas pour réaliser les aimants centraux 7, 14, 32, 33, 38, 39 et les ensembles magnétiques extérieurs 13, 20. En outre, et de manière particulièrement avantageuse, une telle intensité du champ magnétique peut être obtenue dans les entrefers 42, 43 dont la hauteur correspond à environ un tiers de la hauteur des aimants centraux 7, 32, 57, 14,33,58.

### Possibilités d'application industrielle :

Il ressort clairement de cette description que l'invention permet d'atteindre les buts fixés, à savoir proposer un générateur de champ magnétique dont la réalisation est structurellement simple, économique, compacte et qui permet d'obtenir un champ magnétique d'au moins un Tesla dans une configuration rotative. Un tel générateur peut notamment trouver une application aussi bien industrielle que domestique lorsqu'il est intégré dans un appareil thermique magnétocalorique destiné à être exploité dans le domaine du chauffage, de la climatisation, du tempérage, du refroidissement ou autres, à des coûts compétitifs et avec un faible encombrement.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Générateur de champ magnétique (1, 21, 27, 54, 55) pour un appareil thermique magnétocalorique, comportant une première (2, 22, 28) et une seconde (3, 23, 29) structures magnétisantes montées chacune dans une carcasse (35, 36), en regard l'une de l'autre, parallèlement, et agencées pour définir au moins deux entrefers (42, 43, 49, 50, 51, 52) diamétralement opposés, chaque structure magnétisante (2, 22, 28, 3, 23, 29) comportant un premier (4, 24, 30) et un second (5, 25, 31) assemblages magnétisants structurellement identiques, diamétralement opposés et disposés de part et d'autre d'une pièce centrale ferromagnétique (6, 56), chaque premier (4, 24, 30) et second (5, 25, 31) assemblage magnétisant comprenant un premier (7, 32, 57), respectivement un second (14, 33, 58) aimant central polygonal uniformément aimanté comportant une face active (8, 45, 15, 47) du côté de l'entrefer et une face passive (9, 46, 16, 48), parallèles entre elles et comportant au moins quatre côtés, le vecteur d'induction magnétique de chaque aimant central (7, 32, 14, 33) étant perpendiculaire à ses faces active (8, 45, 15, 47) et passive (9, 46, 16, 48), lesdites autres faces, dites faces latérales (10) de chaque aimant central (7, 32, 57, 14, 33, 58) étant quadrangulaires, perpendiculaires auxdites faces active (8, 45, 15, 47) et passive (9, 46, 16, 48) et en contact avec les faces, dites faces intérieures (11, 18) d'une ceinture magnétique (13, 20) uniformément aimantée entourant chaque aimant central (7, 14) et comportant des faces extérieures (12, 19) parallèles auxdites faces intérieures (11, 18), les vecteurs d'induction magnétique dans chaque ceinture magnétique (13, 20) étant perpendiculaires à ses faces intérieures (11, 18), lesdits premier et second assemblages magnétisants (4, 24, 30, 5, 25, 31) étant reliés à ladite pièce ferromagnétique (6, 56) par l'intermédiaire de chaque ceinture magnétique (13, 20) correspondante, **caractérisé en ce que** les première (2, 22, 28) et seconde (3, 23, 29) structures magnétisantes sont identiques et disposées de sorte que la face active (8, 45) du premier aimant central (7, 32, 57) de la première structure magnétisante (2, 22, 28) soit en regard de la face active (15, 47) du second aimant central (14, 33, 58) de la seconde structure magnétisante (3, 23, 29) et que la face active (15, 47) du second aimant central (14, 33, 58) de la première structure magnétisante (2, 22, 28) soit en regard de la face active (8, 45) du premier aimant central (7, 32, 57) de la seconde structure magnétisante (3, 23, 29), **en ce que** le vecteur d'induction magnétique dudit premier aimant central (7, 32, 57) est orienté vers sa face active (8, 45) et les vecteurs d'induction magnétique dans la ceinture magnétique (13) entourant ledit premier aimant central (7, 32, 57) sont dirigés vers ses faces intérieures (11), **en ce que** le vecteur d'induction magnétique dudit second aimant central (14, 33, 58) est orienté vers sa face passive (16, 48) et les vecteurs d'induction magnétique dans la ceinture magnétique (20) entourant ledit second aimant central (14, 33, 58) sont dirigés vers ses faces extérieures (19), et **en ce que** le flux magnétique généré par ledit générateur de champ magnétique (1, 21, 27, 55, 54) forme une boucle unique et circule, dans la première structure magnétisante (2, 22, 28), du second (5, 25, 31) au premier (4, 24, 30) assemblages magnétisants, dans la seconde structure magnétisante (3, 23, 29), du second (5, 25, 31) au premier (4, 24, 30) assemblages magnétisants et, entre les deux structures magnétisantes (2, 22, 28; 3, 23, 29) à travers lesdits entrefers (42, 43, 49, 50, 51, 52), de la face active (8, 45) du premier aimant central (7, 32, 57) de la première structure magnétisante (2, 22, 28) à la face active (15, 47) du second aimant central (14, 33, 58) de la seconde structure magnétisante (3, 23, 29) et de la face active (8, 45) du premier aimant central (7, 32, 57) de la seconde structure magnétisante (3, 23, 29) à la face active (15, 47) du second aimant central (14, 33, 58) de la première structure magnétisante (2, 22, 28).

2. Générateur, selon la revendication 1, **caractérisé en ce qu'**une pièce de concentration magnétique (26) réalisée en une matière ferromagnétique est superposée à la face active (8) de chaque aimant central (7, 14) et entourée de ladite ceinture magnétique (13, 20).

3. Générateur, selon la revendication 1, **caractérisé en ce que** chaque aimant central (57, 58) comporte une pièce de concentration magnétique (59) réalisée en une matière ferromagnétique disposée entre deux aimants permanents (60), le tout étant entouré de ladite ceinture magnétique (13, 20).

4. Générateur, selon la revendication 1, **caractérisé en ce que** les premier (32) et second (33) aimants centraux sont constitués de plusieurs aimants permanents (34).

5. Générateur, selon la revendication 1, **caractérisé en ce que** lesdites première (2,22) et seconde (3, 23) structures magnétisantes sont montées chacune dans une carcasse (35, 36) formant support et réalisée en une matière ferromagnétique.

6. Générateur, selon la revendication 1, **caractérisé en ce qu'**il comprend une troisième structure magnétisante (37) comportant deux aimants centraux (38, 39) polygonaux uniformément aimantés disposés respectivement entre les premier (7) et second (14) aimants centraux desdites première (2, 22) et seconde (3, 23) structures magnétisantes, lesdits aimants centraux (38, 39) de ladite troisième structure magnétisante (37) comportant une première face active (40) et une seconde face active (41) parallèles entre elles et aux faces actives (8, 15) des premiers (7) et seconds (14) aimants centraux, **en ce que** le vecteur d'induction magnétique de chacun desdits aimants centraux (38, 39) de ladite troisième structure magnétisante (37) présente la même orientation et la même direction que les vecteurs d'induction des premier (7) et second (14) aimants centraux entre lesquels ils sont disposés, et **en ce qu'**ils forment quatre entrefers (49, 50, 51, 52) superposés deux à deux et diamétralement opposés deux à deux.

7. Générateur, selon la revendication 1, **caractérisé en ce que** les ceintures magnétiques (13, 20) sont constitués de plusieurs aimants permanents polygonaux.

## Patentansprüche

1. Magnetfeldgenerator (1, 21, 27, 54, 55) für eine magnetokalorische thermische Vorrichtung mit einer ersten (2, 22, 28) und einer zweiten (3, 23, 29) Magnetisierungsstruktur, die jeweils gegenüberliegend parallel in ein Gestell (35, 36) montiert sind und angeordnet sind, um zumindest zwei diametral entgegen gesetzte Luftspalte (42, 43, 49, 50, 51, 52) zu bestimmen, wobei jede Magnetisierungsstruktur (2, 22, 28, 3, 23, 29) eine erste (4, 24, 30) und eine zweite (5, 25, 31) strukturell identische, diametral entgegen gesetzte und beiderseits eines ferromagnetischen Zentralteils (6, 56) angeordnete Magnetisierungs-Anordnung beträgt, wobei jede erste (4, 24, 30) und zweite (5, 25, 31) Magnetisierungs-Anordnung einen ersten (7, 32, 57), bzw. einen zweiten (14, 33, 58) gleichmäßig magnetisierten polygonalen Zentralmagneten beträgt, mit einer aktiven Seite (8, 45, 15, 47) auf der Seite des Luftspalts und einer passiven Seite (9, 46, 16, 48), die parallel zueinander liegen und zumindest vier Seiten betragen, wobei der magnetische Induktionsvektor jedes Zentralmagneten (7, 32, 14, 33) senkrecht zu seiner aktiven (8, 45, 15, 47) und zu seiner passiven Seite (9, 46, 16, 48) verläuft, wobei besagte andere, als Seitenflächen bezeichnete Seiten (10) jedes Zentralmagneten (7, 32, 57, 14, 33, 58) viereckig, senkrecht zu besagter aktiven (8, 45, 15, 47) und passiven (9, 46, 16, 48) Seite sind und mit den als Innenseiten bezeichneten Seiten (11, 18) eines gleichmäßig magnetisierten Magnetgürtels (13, 20) in Kontakt sind, der jedes Zentralmagnet (7, 14) einfasst und zu besagten Innenseiten (11, 18) parallele Außenseiten (12, 19) beträgt, wobei die magnetischen Induktionsvektoren in jedem Magnetgürtel (13, 20) senkrecht zu seinen Innenseiten (11, 18) verlaufen, wobei besagte erste und zweite Magnetisierungs-Anordnung (4, 24, 30, 5, 25, 31) über jeden entsprechenden Magnetgürtel (13, 20) mit besagten ferromagnetischen Teil (6, 56) verbunden sind, **dadurch gekennzeichnet, dass** die erste (2, 22, 28) und die zweite (3, 23, 29) Magnetisierungsstruktur identisch sind und so angeordnet sind, dass die aktive Seite (8, 45) des ersten Zentralmagneten (7, 32, 57) der ersten Magnetisierungsstruktur (2, 22, 28) gegenüber der aktiven Seite (15, 47) des zweiten Zentralmagneten (14, 33, 58) der zweiten Magnetisierungsstruktur (3, 23, 29) liegt, und dass die aktive Seite (15, 47) des zweiten Zentralmagneten (14, 33, 58) der ersten Magnetisierungsstruktur (2, 22, 28) gegenüber der aktiven Seite (8, 45) des ersten Zentralmagneten (7, 32, 57) der zweiten Magnetisierungsstruktur (3, 23, 29) liegt, dadurch, dass der magnetische Induktionsvektor von besagtem ersten Zentralmagneten (7, 32, 57) gegen seine aktive Seite (8, 45) gerichtet ist, und die magnetischen Induktionsvektoren in Magnetgürtel (13), der besagten ersten Zentralmagneten (7, 32, 57) einfasst, gegen seine Innenseiten (11) gerichtet sind, dadurch, dass der magnetische Induktionsvektor von besagtem zweiten Zentralmagneten (14, 33, 58) gegen seine passive Seite (16, 48) gerichtet ist und die magnetischen Induktionsvektoren in Magnetgürtel (20), der besagten zweiten Zentralmagneten einfasst (14, 33, 58) gegen seine Außenseiten (19) gerichtet sind, und dadurch, dass der von besagtem Magnetfeldgenerator (1, 21, 27, 55, 54) erzeugte magnetische Fluss eine einzige Schleife bildet und in der ersten Magnetisierungsstruktur (2, 22, 28) von der zweiten (5, 25, 31) zur ersten (4, 24, 30) Magnetisierungs-Anordnung und in der zweiten Magnetisierungsstruktur (3, 23, 29), von der zweiten (5, 25, 31) zur ersten (4, 24, 30) Magnetisierungsstruktur fließt und, zwischen den beiden Magnetisierungsstrukturen (2, 22, 28; 3, 23, 29) über besagte Luftspalte (42, 43, 49, 50, 51, 52), von der aktiven Seite (8, 45) des ersten Zentralmagneten (7, 32, 57) der ersten Magnetisierungsstruktur (2, 22, 28) zur aktiven Seite (15, 47) des zweiten Zentralmagneten (14, 33, 58) der zweiten Magnetisierungsstruktur (3, 23, 29) und von der aktiven Seite (8, 45) des ersten Zentralmagneten (7, 32, 57) der zweiten Magnetisierungsstruktur (3, 23, 29) zur aktiven Seite (15, 47) des zweiten Zentralmagneten (14, 33, 58) der ersten Magnetisierungsstruktur (2, 22, 28) fließt.

2. Generator nach Anspruch 1, **dadurch gekennzeichnet, dass** ein magnetisches Konzentrationsteil (26) aus einem ferromagnetischen Material über der aktiven Seite (8) jedes Zentralmagneten (7, 14) angeordnet ist und von besagtem Magnetgurt (13, 20) umfasst ist.

3. Generator nach Anspruch 1, **dadurch gekennzeichnet, dass** jedes Zentralmagnet (57, 58) ein magnetisches Konzentrationsteil (59) aus einem ferromagnetischen Material beträgt, das zwischen zwei Permanentmagneten (60) angeordnet ist, wobei das Ganze von besagtem Magnetgurt (13, 20) umfasst ist.

4. Generator nach Anspruch 1, **dadurch gekennzeichnet, dass** das erste (32) und das zweite (33) Zentralmagnet aus mehreren Permanentmagneten (34) bestehen.

5. Generator nach Anspruch 1, **dadurch gekennzeichnet, dass** besagte erste (2, 22) und zweite (3, 23) Magnetisierungsstruktur jeweils in ein Gestell (35, 36) montiert ist, das einen Träger bildet und aus einem ferromagnetischen Material hergestellt ist.

6. Generator nach Anspruch 1, **dadurch gekennzeichnet, dass** er eine dritte Magnetisierungsstruktur (37) beträgt, mit zwei gleichmäßig magnetisierten polygonalen Zentralmagneten (38, 39), die jeweils zwischen den ersten (7) und den zweiten (14) Zentralmagneten von besagter ersten (2, 22) und zweiten (3, 23) Magnetisierungsstruktur angeordnet sind, wobei besagte Zentralmagnete (38, 39) von besagter dritter Magnetisierungsstruktur (37) eine erste aktive Seite (40) und eine zweite aktive Seite (41) betragen, die parallel zueinander und zu den aktive Seiten (8, 15) der ersten (7) und der zweiten (14) Zentralmagneten sind, dadurch, dass der magnetische Induktionsvektor jedes der besagten Zentralmagneten (38, 39) von besagter dritten Magnetisierungsstruktur (37) die selbe Orientierung und Richtung aufweist, als die Induktionsvektoren der ersten (7) und zweiten (14) Zentralmagneten, zwischen denen sie angeordnet sind, und dadurch, dass sie vier Luftspalte (49, 50, 51, 52) bilden, die paarweise übereinander und paarweise diametral entgegen gesetzt angeordnet sind.

7. Generator nach Anspruch 1, **dadurch gekennzeichnet, dass** die Magnetgürtel (13, 20) aus mehreren polygonalen Permanentmagneten bestehen.

## Claims

1. Magnetic field generator (1, 21, 27, 54, 55) for a magnetocaloric thermal appliance comprising a first (2, 22, 28) and a second (3, 23, 29) magnetizing structure each mounted in a frame (35, 36), opposite to each other, parallel, and arranged to define at least two diametrically opposite air gaps (42, 43, 49, 50, 51, 52), each magnetizing structure (2, 22, 28, 3, 23, 29) comprising a first (4, 24, 30) and a second (5, 25, 31) structurally identical magnetizing assemblies, diametrically opposite and arranged on either side of a ferromagnetic central part (6, 56), each first (4, 24, 30) and second (5, 25, 31) magnetizing assembly comprising a first (7, 32, 57), respectively a second (14, 33, 58), polygonal, uniformly magnetized central magnet comprising an active side (8, 45, 15, 47) on the side of the air gap and a passive side (9, 46, 16, 48), parallel with each other and comprising at least four sides, with the magnetic induction vector of each central magnet (7, 32, 14, 33) perpendicular to its active (8, 45, 15, 47) and passive (9, 46, 16, 48) sides, said other sides, called lateral sides (10) of each central magnet (7, 32, 57, 14, 33, 58) being quadrangular, perpendicular to said active (8, 45, 15, 47) and passive (9, 46, 16, 48) sides and in contact with the sides called internal sides (11, 18) of a uniformly magnetized magnetic belt (13, 20) surrounding each central magnet (7, 14) and comprising external sides (12, 19) parallel to said internal sides (11, 18), the magnetic induction vectors in each magnetic belt (13, 20) being perpendicular to its internal sides (11, 18), said first and second magnetizing assemblies (4, 24, 30, 5, 25, 31) being connected to said ferromagnetic part (6, 56) by means of every corresponding magnetic belt (13, 20), **characterized in that** the first (2, 22, 28) and second (3, 23, 29) magnetizing structures are identical and arranged so that the active side (8, 45) of the first central magnet (7, 32, 57) of the first magnetizing structure (2, 22, 28) is opposite to the active side (15, 47) of the second central magnet (14, 33, 58) of the second magnetizing structure (3, 23, 29) and that the active side (15, 47) of the second central magnet (14, 33, 58) of the first magnetizing structure (2, 22, 28) is opposite to the active side (8, 45) of the first central magnet (7, 32, 57) of the second magnetizing structure (3, 23, 29), **in that** the magnetic induction vector of said first central magnet (7, 32, 57) is oriented towards its active side (8, 45) and the magnetic induction vectors in the magnetic belt (13) surrounding said first central magnet (7, 32, 57) are directed towards its internal sides (11), **in that** the magnetic induction vector of said second central magnet (14, 33, 58) is oriented towards its passive side (16, 48) and the magnetic induction vectors in the magnetic belt (20) surrounding said second central magnet (14, 33, 58) are directed towards its external sides (19), and **in that** the magnetic flux generated by said magnetic field generator (1, 21, 27, 55, 54) forms one single loop and circulates, in the first magnetizing structure (2, 22, 28), from the second (5, 25, 31) to the first (4, 24, 30) magnetizing assembly, in the second magnetizing structure (3, 23, 29), from the second (5, 25, 31) to the first (4, 24, 30) magnetizing assembly and, between the two magnetizing structures (2, 22, 28; 3, 23, 29), through said air gaps (42, 43, 49, 50, 51, 52), from the active side (8, 45) of the first central magnet (7, 32, 57) of the first magnetizing structure (2, 22, 28) to the active side (15, 47) of the second central magnet (14, 33, 58) of the second magnetizing structure (3, 23, 29) and from the active side (8, 45) of the first central magnet (7, 32, 57) of the second magnetizing structure (3, 23, 29) to the active side (15, 47) of the second central magnet (14, 33, 58) of the first magnetizing structure (2, 22, 28).

2. Generator according to claim 1, **characterized in that** a magnetic concentration piece (26) made out of a ferromagnetic material is topping the active side (8) of each central magnet (7, 14) and is surrounded by said magnetic belt (13, 20).

3. Generator according to claim 1, **characterized in that** each central magnet (57, 58) comprises a magnetic concentration piece (59) made out of a ferromagnetic material arranged between two permanent magnets (60), the whole being surrounded by said magnetic belt (13, 20).

4. Generator according to claim 1, **characterized in that** the first (32) and second (33) permanent magnets are made of several permanent magnets (34).

5. Generator according to claim 1, **characterized in that** said first (2, 22) and second (3, 23) magnetizing structures are mounted each in a frame (35) that forms a support made out of a ferromagnetic material.

6. Generator according to claim 1, **characterized in that** it comprises a third magnetizing structure (37) comprising two polygonal, uniformly magnetized central magnets (38, 39) arranged respectively between the first (7) and second (14) central magnets of said first (2, 22) and second (3, 23) magnetizing structures, said central magnets (38, 39) of said third magnetizing structure (37) comprising a first active side (40) and a second active side (41) parallel to each other and to the active sides (8, 15) of the first (7) and second (14) central magnets, **in that** the magnetic induction vector of each of said central magnets (38, 39) of said third magnetizing structure (37) has the same orientation and the same direction as the induction vectors of the first (7) and second (14) central magnets between which they are arranged, and **in that** they form four air gaps (49, 50, 51, 52) superimposed two by two and diametrically opposite two by two.

7. Generator according to claim 1, **characterized in that** the magnetic belts (13, 20) are made of several polygonal permanent magnets.
